# EUROPÄISCHE PATENTSCHRIFT

(11) **EP 2 892 735 B1**
(45) Veröffentlichungstag und Bekanntmachung des Hinweises auf die Patenterteilung: **20.07.2016**
(21) Anmeldenummer: 13742468.5
(22) Anmeldetag: 01.08.2013
(51) Int. Cl.: B60C 11/03

(54) **FAHRZEUGLUFTREIFEN**
VEHICLE PNEUMATIC TYRE
PNEUMATIQUE DE VÉHICULE

(30) Priorität: 10.09.2012 DE 102012108383
(43) Veröffentlichungstag der Anmeldung: 15.07.2015
(73) Patentinhaber: Continental Reifen Deutschland GmbH, 30165 Hannover (DE)
(72) Erfinder: BEHR, Ulrich, 30169 Hannover (DE)
(74) Vertreter: Finger, Karsten
(86) Internationale Anmeldenummer: PCT/EP2013/066139
(87) Internationale Veröffentlichungsnummer: WO 2014/037166

(56) Entgegenhaltungen:
- CA-A1- 2 176 519
- DE-A1- 3 303 305
- US-A- 2 575 439
- US-A1- 2006 231 181

## Beschreibung

Die Erfindung betrifft einen Fahrzeugluftreifen mit einem Laufstreifen, welcher durch Umfangsrillen und in Umfangsrichtung umlaufende Profilpositive, zu welchen zumindest ein Profilband gehört, gegliedert ist, wobei im Profilband Rillen mit einer Breite von 0,8 mm bis 1,5 mm ausgebildet sind.

Fahrzeugluftreifen mit derartigen Laufstreifen sind in unterschiedlichen Ausführungen bekannt. Üblich sind beispielsweise Laufstreifen mit Profilblockreihen mit durch Querrillen voneinander getrennten Blöcken und/oder mit Profilbändern, in welche von einer Umfangsrille ausgehend Rillen verlaufen, welche im Profilband enden. Aus der JP-A-01047603 ist ein Laufstreifen bekannt, welcher ein aus mehreren Blockreihen zusammengesetztes Laufstreifenprofil aufweist, wobei in jedem Block von einer zentralen Vertiefung des Blockes ausgehend im Wesentlichen strahlenförmig schmale Rillen bzw. Einschnitte bis zu den Blockkanten verlaufen und hier in die den Block begrenzenden Rillen münden. Durch diese Ausführung und Anordnung der schmalen Rillen bzw. Einschnitte wird der jeweilige Block durchgeschnitten und in eine größere Anzahl von Blockteile gegliedert, was den betreffenden Block weich, beweglich und instabil macht.

Aus der EP-B-0 618 091 ist ein Fahrzeugreifen, welcher insbesondere für den Einsatz unter winterlichen Fahrbedingungen vorgesehen ist, bekannt, dessen Laufstreifen Profilblöcke aufweist, die jeweils mit einer Vielzahl von Einschnitten versehen sind, welche vom Zentralbereich des jeweiligen Profilblockes strahlenförmig ausgehend bis zu den Profilblockkanten verlaufen. Der Zentralbereich ist im Gegensatz zur Ausführung gemäß der JP-A-01047603 massiv ausgeführt, sodass die Einschnitte miteinander nicht verbunden sind. Durch den massiv ausgeführten Zentralbereich soll der jeweilige Profilblock eine höhere Steifigkeit aufweisen, die strahlenförmige Anordnung der Einschnitte soll eine Vielzahl von Griffkanten zur Verfügung stellen.

Bei der Gestaltung von Einschnitten, schmalen Rillen und dergleichen in Profilpositiven von Laufstreifenprofilen ist es oft schwierig, unterschiedliche und vorteilhafte Eigenschaften gleichzeitig und gleichermaßen zu verbessern. Ist es nicht möglich, eine Eigenschaft ohne Verschlechterung einer anderen Eigenschaft zu verbessern, spricht man von einem Zielkonflikt zwischen diesen Eigenschaften. Ein solcher Zielkonflikt besteht beispielsweise zwischen Maßnahmen, die zur Verbesserung des Trockenhandlings, und Maßnahmen, die zur Verbesserung des Handlings bei Nässe, gesetzt werden.

Der Erfindung liegt die Aufgabe zugrunde, bei einem Reifen der eingangs genannten Art die Rillen in Profilpositiven im Laufstreifenprofil derart auszuführen, dass die Performance des Reifens auf trockenen Fahrbahnen gleichermaßen wie die Performance des Reifens auf nassen Fahrbahnen verbessert sind.

Gelöst wird die gestellte Aufgabe erfindungsgemäß dadurch, dass jeweils drei Rillen eine Rillengruppe bilden, in welcher die Rillen von einem vertieften Zentralbereich ausgehend im Wesentlichen analog zu den Zacken eines regulären Sterns verlaufen, wobei zumindest zwei Rillen der Rillengruppe innerhalb des Profilbandes enden und eine Rille in axialer oder im Wesentlichen in axialer Richtung des Laufstreifens verläuft.

Erfindungsgemäß in Rillengruppen angeordnete Rillen stellen eine Vielzahl an Kanten und daher in Summe eine große Kantenlänge und gleichzeitig ein erhöhtes Negativvolumen zur Verfügung, ohne dabei die Steifigkeit des Profilpositivs zu verringern. Die Steifigkeit des Profilpositivs wird zudem dadurch positiv beeinflusst, dass eine der Rillen in axialer bzw. im Wesentlichen in axialer Richtung verläuft. Durch den erfindungsgemäßen "sternzackenförmigen" Verlauf der drei Rillen zueinander wird ein gleichzeitiges Aufschlagen der Rillenkanten beim Durchlaufen des Reifens im Footprint vermieden, was zu einer Reduktion der Geräuschemission des Reifens beiträgt.

Gemäß einer bevorzugten Ausführungsform der Erfindung sind im Profilband Rillengruppen angeordnet, deren Rillen sämtlich innerhalb des Profilbandes enden. Im Vergleich zu Profilbändern mit einem ähnlich großen Negativanteil weist ein erfindungsgemäß ausgeführtes Profilband eine größere Steifigkeit auf.

Um die Entwässerung des Profilbandes mit erfindungsgemäß ausgeführten Rillengruppen zu optimieren, ist es vorteilhaft, wenn im Profilband Rillengruppen angeordnet sind, deren in axialer oder im Wesentlichen in axialer Richtung verlaufende Rillen in eine Umfangsrille münden.

Bei einer weiteren bevorzugten Ausführungsform der Erfindung sind die Übergangsbereiche der Rillenwände der in axialer oder im Wesentlichen in axialer Richtung verlaufenden Rille zur Oberfläche der Profilbandes von Fasen gebildet. Dadurch werden die Rillenkanten stabilisiert, was unter starker Krafteinwirkung, beispielsweise beim Trockenbremsen oder beim Trockenhandling, Kanten-Einrolleffekte vermeidet, die sich negativ auf die Reifenperformance auswirken könnten.

In diesem Zusammenhang ist es auch von Vorteil, wenn die Übergangsbereiche der bezüglich des Zentralbereiches außenseitig verlaufenden Rillenwände der beiden weiteren Rillen von Fasen gebildet sind.

Für die Stabilisierung des Profilbandes und die Entwässerungswirkung der Profilgruppen ist es vorteilhaft, wenn die an der Oberfläche des Profilbandes verlaufenden Längskanten der Fasen an den äußeren Enden der Rillen beginnend in Richtung Zentralbereich, in Draufsicht auf das Profilband betrachtet, unter einem spitzen Winkel zur Mittellängsachse der Rille verlaufen, derart, dass die Rillengruppe eine sternförmige Außenkontur aufweist.

Um Kerbspannungen an den Rillenenden zu reduzieren und ein Einreißen von Gummimaterial in diesen Bereichen zu verhindern, ist es vorteilhaft, wenn im Profilband Rillengruppen mit Rillen angeordnet sind, deren Rillengrund vom Zentralbereich in Richtung geschlossenes Ende der Rillen rampenartig ansteigt.

Für das Nasshandling und das Aquaplaningverhalten des Reifens ist es von Vorteil, wenn die maximale Tiefe des Zentralbereiches und der Rillen der im Laufstreifen vorgesehenen Profiltiefe entspricht.

Eine für die Hochgeschwindigkeitstauglichkeit des Reifens vorteilhafte und homogene Positiv-/Negativverteilung im Profilband wird insbesondere dadurch unterstützt, dass die Rillen einer Rillengruppe zumindest im Wesentlichen übereinstimmende Erstreckungslängen aufweisen und ferner, dass die Rillen einer Rillengruppe über die Erstreckung konstant breit und vorzugsweise übereinstimmend breit ausgeführt sind.

Die Rillengruppen können im Profilband auf unterschiedliche Arten angeordnet werden. Besonders vorteilhaft ist es, wenn die Rillengruppen im Profilband in zumindest einer, insbesondere in bis zu vier, vorzugsweise in drei, in Umfangsrichtung verlaufenden Reihen angeordnet sind. Es kann daher das Verhältnis zwischen Positiv- und Negativanteil im Profilband an den Reifentyp bzw. an die Position des jeweiligen Profilbandes im Laufstreifen gut angepasst werden, wodurch sich der eingangs erwähnte Zielkonflikt zwischen Nassperformance und Trockenperformance besonders gut lösen lässt.

Besonders vorteilhaft für die Geräuschemission des Reifens ist eine Anordnung der Rillengruppen innerhalb einer Reihe derart, dass ihre in axiale Richtung verlaufenden Rillen abwechselnd unterschiedlich orientiert sind.

Besonders günstig ist es, ein erfindungsgemäß mit Rillengruppen versehenes Profilband im Laufstreifen bei einem Schulterbereich des Reifens, insbesondere der Innenschulter des Reifens, anzuordnen. Diese Maßnahme verbessert das Handlingverhalten des Reifens, insbesondere bei kleinen Lenkwinkeln.

Von besonderem Vorteil ist die Erfindung für Laufstreifen von Sportreifen, demnach für Reifen, die für das Fahren mit sehr hoher Geschwindigkeit vorgesehen und ausgeführt sind.

Weitere Merkmale, Vorteile und Einzelheiten der Erfindung werden nun anhand der Zeichnung, die Ausführungsbeispiele darstellt, näher beschrieben. Dabei zeigen
Fig. 1 eine Draufsicht auf einen Umfangsabschnitt eines Profilbandes eines Laufstreifenprofils eines Fahrzeugluftreifens,
Fig. 2 eine Draufsicht auf eine Basisvariante einer Rillengruppe,
Fig. 3 und Fig. 4 Schnittdarstellungen gemäß den Schnittlinien III-III und IV-IV der Fig. 2,
Fig. 5 und Fig. 6 Schnittdarstellungen gemäß den Schnittlinien V-V und VI-VI der Fig. 2,
Fig. 7 und Fig. 8 Varianten von Anordnungen von Rillengruppen in Profilbändern und
Fig. 9 eine Schnittdarstellung entlang der Linie IX-IX der Fig. 8.

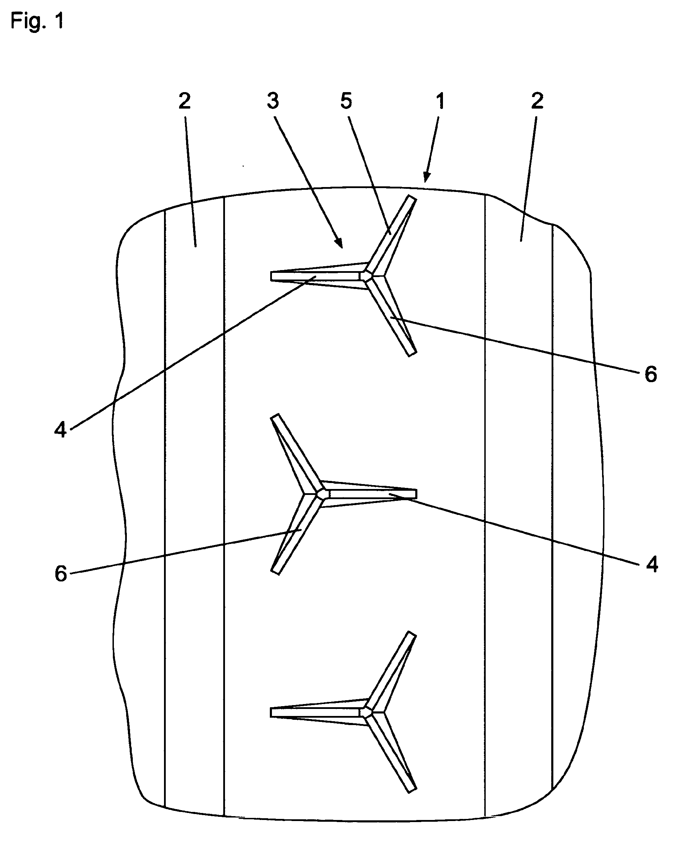

Fig. 1 zeigt schematisch ein Profilband 1 eines Laufstreifenprofils eines Fahrzeugluftreifens in radialer Bauart für einen PKW. Das in Fig. 1 gezeigte Profilband 1 kann die für Profilbänder im Laufstreifen von PKW-Reifen übliche Breite in der Größenordnung von 18 mm bis 36 mm aufweisen und ist von je einer in Umfangsrichtung gerade umlaufenden breiten Umfangsrille 2 begrenzt, an welche seitlich bzw. in axialer Richtung weitere Profilpositive anschließen, die im Detail nicht dargestellt und nicht bezeichnet sind und beispielsweise Profilbänder und/oder Profilblockreihen sein können. In der nachfolgenden Beschreibung wird unter "Tiefe", "Profiltiefe" und dergleichen jeweils der in radialer Richtung ermittelte Abstand zwischen der Oberfläche des Profilbandes 1 und der erwähnten Stelle, beispielsweise ein Rillengrund, verstanden. Die tiefste Stelle der Umfangsrillen 2 befinden sich in der für den betreffenden Laufstreifen vorgesehenen maximalen Profiltiefe, welche üblicherweise in der Größenordnung zwischen 6,0 mm und 8,5 mm gewählt wird, die Breite der Umfangsrillen 2 beträgt in der Größenordnung von 6 mm bis 10 mm. Das Profilband 1 weist als Strukturelemente eine Vielzahl von in Umfangsrichtung aufeinander folgenden bzw. aneinander gereihten Rillengruppen 3 auf. Unter einer Rillengruppe 3 wird im Rahmen der gegenständlichen Erfindung eine Anordnung von drei Rillen 4, 5, 6 verstanden, die zueinander analog den Zacken eines dreizackigen, regulären Sterns verlaufen. Gemäß der gezeigten und auch bevorzugten Ausführungsform sind die drei Rillen 4, 5, 6 daher zueinander um jeweils 120° versetzt, wobei dieser Winkel im Rahmen der Erfindung um bis zu +/- 10° von 120° abweichen kann. Die Rillen 4, 5, 6 münden in einen gemeinsamen Zentralbereich 7, welcher eine Vertiefung im Profilband 1 ist. Die Rillen 4, 5, 6 können vom Zentralbereich 7 ausgehend zumindest einen ersten Abschnitt in ihrer jeweiligen Erstreckung aufweisen, welcher in einer Tiefe ausgeführt ist, die der Tiefe des Zentralbereiches 7 entspricht. Ansonsten bildet bei erfindungsgemäß ausgeführten Rillengruppen 3 der Zentralbereich 7 die tiefste Stelle der Rillengruppe 3 bildet. Die maximale Tiefe des Zentralbereiches 7 und der Rillen 4, 5, 6 entspricht der im Laufstreifenprofil vorgesehenen Profiltiefe. Selbstverständlich ist es möglich und, je nach Anordnung der Rillengruppen 3 im Laufstreifenprofil auch zweckmäßig, die größte Tiefe in der Rillengruppe 3 geringer als die vorgesehene Profiltiefe zu wählen.

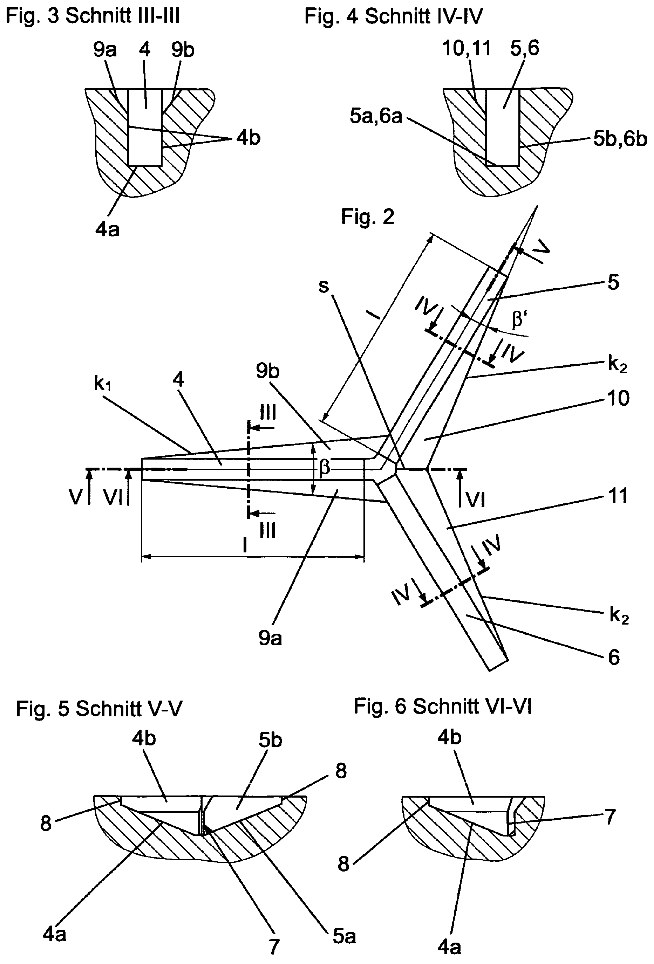

Die Rillen 4, 5, 6 weisen jeweils eine vorzugsweise konstante und für sämtliche Rillen 4, 5, 6 vorzugsweise übereinstimmende Breite von 0,8 mm bis 1,5 mm, insbesondere in der Größenordnung von 1 mm, auf. Von der Mitte des Zentralbereiches 7 erstreckt sich jede Rille 4, 5, 6 geradlinig über eine Erstreckungslänge 1 von 5 mm bis 20 mm, wobei bei einer bevorzugten Ausführungsform sämtliche Rillen 4, 5, 6 zumindest im Wesentlichen gleich große Erstreckungslängen 1 aufweisen. Es ist jedoch auch möglich, die Rillen 4, 5, 6 mit unterschiedlich großen Erstreckungslängen 1 auszuführen. Wie Fig. 3 und Fig. 4 zeigen, sind die Rillen 4, 5, 6 über ihre Erstreckung von zwei in radialer Richtung und parallel zueinander verlaufenden Rillenwänden 4b, 5b, 6b begrenzt. Dies stellt die bevorzugte Ausführung dar, die Rillenwände 4b, 5b, 6b können gegenüber der radialen Richtung auch unter einem kleinen spitzen Winkel von insbesondere bis zu 10° geneigt sein, derart, dass die Rillen 4, 5, 6 zur Oberfläche des Profilbandes 1 breiter werden.

Es ist grundsätzlich möglich, sämtliche oder ausgewählte Rillen 4, 5, 6 über ihre Erstreckungslängen 1 in gleichbleibender konstanter Tiefe auszuführen. In diesem Fall ist es vorteilhaft, an den geschlossenen Enden der Rillen 4, 5, 6 einen gerundeten Übergang zwischen der endseitigen Flanke und dem Rillengrund der Rillen 4, 5, 6 vorzusehen.

Wie es die Schnittdarstellungen in Fig. 5 und Fig. 6 zeigen, ist gemäß der dargestellten bevorzugten Ausführungsform der Erfindung der Rillengrund 4a, 5a, 6a der Rillen 4, 5, 6 vom Zentralbereich 7 bis zu Flanken 8 an den Enden rampenartig ansteigend ausgeführt. Daraus ergibt sich eine kontinuierlich geringer werdende Tiefe der Rillen 4, 5, 6 bis zu ihren geschlossenen Enden. An den Enden verbindet jeweils die in radialer Richtung verlaufende Flanke 8 den Rillengrund 4a, 5a, 6a mit der Oberfläche des Profilbandes 1. Die Flanken 8 weisen eine radiale Erstreckung von 0,8 mm bis 1,5 mm auf.

Sogenannte Fasen 9a, 9b, 10, 11 bilden Übergangsflächen zwischen den beiden Rillenwänden 4b der einen Rille 4 und je einer Rillenwand 5b, 6b der beiden weiteren Rillen 5, 6 zur Oberfläche des Profilbandes 1. Die Fasen 9a, 9b, 10, 11 sind entlang der Erstreckungslängen 1 der Rillen 4, 5 und 6 verlaufende Schrägflächen. Die Fasen 10 und 11 schließen an jene Rillenwände 5b, 6b der Rillen 5, 6 an, die aneinander grenzen und miteinander den erwähnten Winkel von 120° bzw. etwa 120° einschließen. Die Fasen 10 und 11 besitzen beim Zentralbereich 7 eine gemeinsame Seite s. Durch die Fasen 9a, 9b, 10, 11 wird die Höhe der jeweiligen Rillenwand 4b, 5b, 6b, an welche sie anschließen, verringert. In radialer Richtung betrachtet, reichen die Fasen 9a, 9b, 10, 11 bis in eine Tiefe von 2 mm, welche über ihre Erstreckung konstant sein kann. Die Längskanten k₁ der Fasen 9a, 9b an der Oberfläche des Profilbandes verlaufen geradlinig vom jeweiligen äußeren Ende der Rille 4 an der Flanke 8 bis zur Rille 5 bzw. 6 und in Draufsicht betrachtet unter einem spitzen Winkel β von etwa 5° bis 15° auseinander. Die Längskanten k₂ der Fasen 10, 11 verlaufen geradlinig vom äußeren Ende der Rille 5, 6, treffen beim Zentralbereich aneinander und weisen hier die erwähnte gemeinsame Seite s auf. Jede Längskante k₂ verläuft dabei unter einem spitzen Winkel β' zur Rille 5 bzw. 6.

Die Längskanten k₁ und k₂ verleihen daher der Außenkontur der Rillengruppe 3 eine Sternform.

Die Fasen 9a, 9b, 10 und 11 weisen über ihren Verlauf entlang der Rillenwände 4b, 5b, 6b einen sich ändernden Neigungswinkel zur radialen Richtung auf, der Neigungswinkel beträgt an der Flanke 8 0° und wird in Richtung Zentralbereich 7 kontinuierlich größer und beträgt am innenseitigen Ende der Fasen 9a, 9b, 10, 11 bis zu 45°.

In dem in Umfangsrichtung umlaufenden Profilband 1 sind die Rillengruppen 3 derart angeordnet, dass die mit zwei Fasen 9a und 9b versehene Rille 4 in axialer Richtung bzw. im Wesentlichen in axialer Richtung verläuft. Dadurch ergeben sich beispielsweise die in Fig. 1 gezeigten zwei unterschiedlichen Orientierungen erfindungsgemäßer Rillengruppen 3. In Fig. 1 ist ferner eine alternierende Aufeinanderfolge von Rillengruppen 3 dargestellt, die Rille 4 weist in aufeinander folgenden Rillengruppen 3 abwechselnd in Richtung der einen Umfangsrille 2 und in Richtung der anderen Umfangsrille 2.

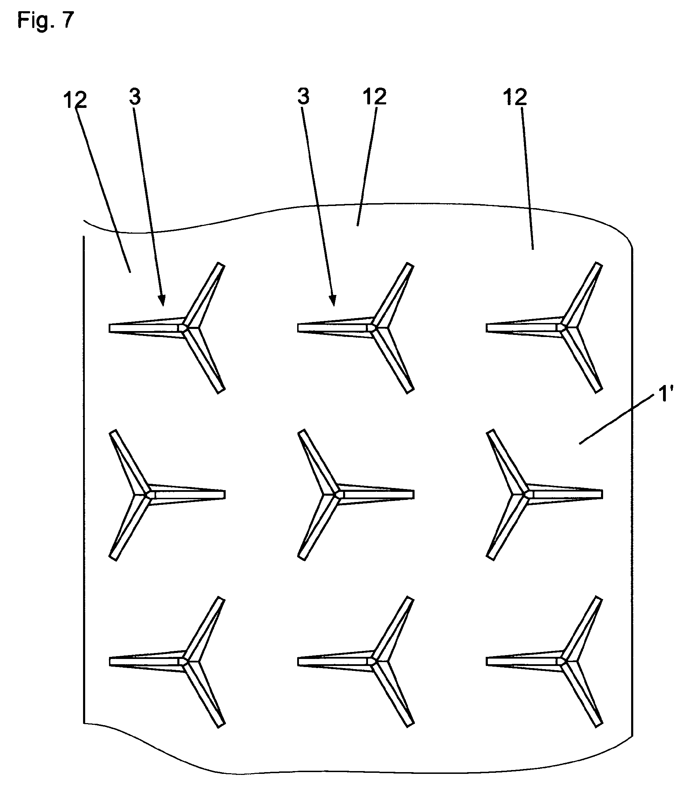

Fig. 7 zeigt eine weitere grundsätzliche Möglichkeit der Anordnung von Rillengruppen 3 in einem Profilband 1' in drei in Umfangsrichtung verlaufenden Reihen 12. Möglich wäre auch eine Anordnung von Rillengruppen 3 in zwei in Umfangsrichtung verlaufenden Reihen 12. Die drei Reihen 12 verlaufen in Umfangsrichtung parallel zueinander.

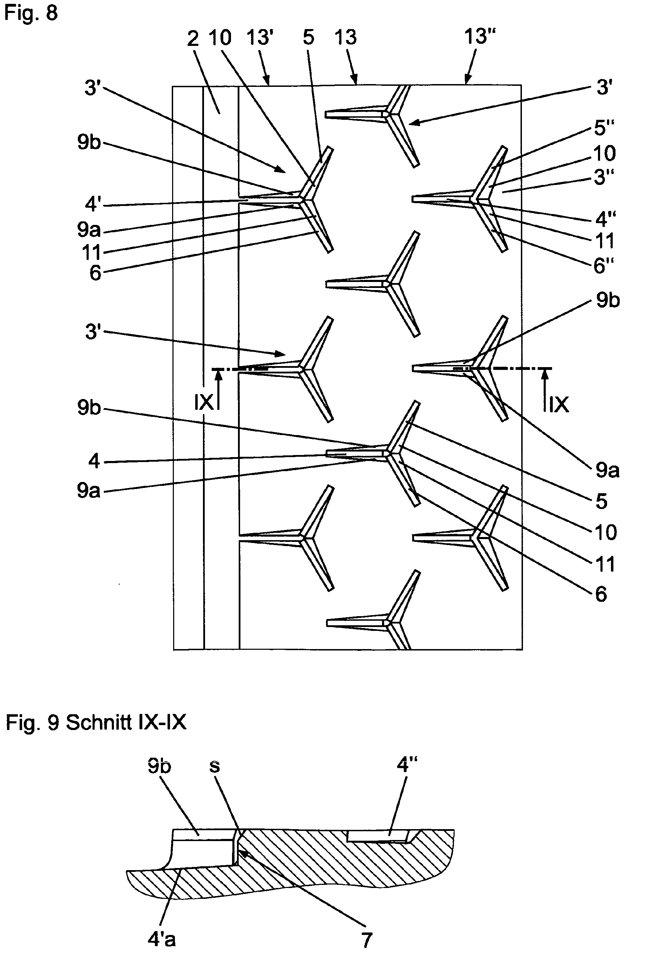

Fig. 8 zeigt eine alternative Anordnung von drei Reihen 13, 13', 13" von Rillengruppen 3, 3', 3" in einem Profilband 1". Bei der in Fig. 8 gezeigten Ausführungsform eines Profilbandes 1" handelt es sich um ein reifenschulterseitig im Laufstreifen angeordnetes Profilband, insbesondere an der Innenseite des Laufstreifens. Das heißt, dass ein Reifen mit einem Laufstreifen mit diesem Profilband 1" derart am Fahrzeug zu montieren ist, dass sich dieses Profilband 1" bei jener Reifenschulter befindet, die der Fahrzeuglängsachse näher liegt. Der Reifen wird entsprechend gekennzeichnet. Laufstreifeninnenseitig ist das Profilband 1" von einer Umfangsrille 2 begrenzt.

Die in der mittleren Reihe 13 verlaufenden Rillengruppen 3 sind gemäß den bereits oben beschriebenen Rillengruppen 3 ausgeführt. Die in der axial innenseitig verlaufenden Reihe 13' vorgesehenen Rillengruppen 3' weisen Rillen 5, 6 auf, die den bereits beschriebenen Rillen 5, 6 entsprechen. Wie die Schnittdarstellung in Fig. 9 zeigt, mündet die dritte Rille 4' in die Umfangsrille 2, wobei der Rillengrund 4'a der Rille 4' entweder vom Zentralbereich 7 bis zur Umfangsrille 2 auf das Niveau des Rillengrundes der Umfangsrille 2 abfüllt oder, falls der Zentralbereich 7 gleich tief wie die Umfangsrille 2 ausgeführt ist, in dieser Tiefe verläuft. Die axial außenseitig in der Reihe 13" verlaufenden Rillengruppen 3" bestehen aus Rillen 4", 5", 6", die sehr seicht ausgeführt sind. Durch die übliche Konturierung des Laufstreifens nahe der Schulterbereiche eines Reifens, steht in diesen Bereichen eine geringere Gummidicke zur Verfügung als im mittleren Bereich des Laufstreifens. Fig. 9 zeigt dies anhand eines Schnittes durch die Rille 4". Sämtliche Rillen 4, 5, 6, 4', 4", 5", 6" der Rillengruppen 3, 3', 3" sind wie oben beschrieben mit Fasen 9a, 9b, 10, 11 versehen. In den Rillen 4", 5 ", 6" dominieren die Fasen 9a, 9b, 10 und 11 als Strukturelemente.

In Fig. 8 sind beispielhaft sämtliche Rillengruppen 3, 3', 3" derart angeordnet, dass ihre von zwei Fasen 9a, 9b begrenzten Rillen 4, 4', 4" in Richtung zur Laufstreifeninnenseite und in axialer Richtung verlaufen. Die Rillengruppen 3', 3" in den beiden äußeren Reihen 13', 13" verlaufen im Wesentlichen parallel, die Rillengruppen 3 in der mittleren Reihe 13 sind jeweils in Umfangsrichtung mittig zwischen zwei Paaren von Rillengruppen 3', 3" aus den Reihen 13', 13" positioniert.

Erfindungsgemäße in Rillengruppen zusammengefasste Rillen weisen im Vergleich zu herkömmlichen Querrillen insgesamt eine wesentlich größere Kantenlänge sowie ein größeres Negativvolumen bei vergleichbarer Steifigkeit auf. Durch den sternzackenförmigen Verlauf der Rillen wird ein gleichzeitiges Auftreffen der Rillenkanten der Rillen beim Durchlaufen des Reifens im Footprint vermieden, was zu einer Reduktion der Geräuschemission beiträgt. Die Anordnung erfindungsgemäßer Rillengruppen in Profilpositiven nahe des Innenschulterbereiches des Laufstreifens zergliedern diesen Laufstreifenbereich wesentlich weniger als die üblichen Profilblockreihen in diesem Bereich. Es entsteht ein Profilband mit "zusammenhängenden" Profilpositivflächen mit einem im Vergleich zu herkömmlichen Ausführungen vergleichbar großen Negativvolumen. Die erzielbare höhere Steifigkeit des Profilbandes hat vor allem Vorteile beim Trockenbremsen und im Handling, speziell hinsichtlich des Lenkverhaltens bei geringen Lenkwinkeln.

Die sternzackenartig verlaufenden Rillen werden, wie es üblich ist, durch entsprechende Vorsprünge in der Reifenheizform in den Laufstreifen eingeprägt. Die dabei gebildeten "zusammenhängenden" Positivbereiche weisen den Vorteil auf, dass sich das Gummimaterial beim Einformungsprozess in die Vulkanisationsform homogener verteilen kann und dadurch etwaige Massenunterschiede im Gummimaterial ausgeglichen werden. Dadurch vergleichmäßigt sich die Umfangsverteilung der Gummimenge in diesem Laufstreifenbereich, was den Rundlauf des Reifens verbessert. Ein guter Rundlauf führt zu einer Optimierung der High-Speed-Performance und verringert die Geräuschemission.

Erfindungsgemäß ausgeführte Rillen können auch in Profilpositiven vorgesehen werden, die Profilblöcke sind, welche insbesondere in einer in Umfangsrichtung des Laufstreifenprofils umlaufenden Profilblockreihe aneinander gereiht und durch Quernuten voneinander getrennt sind.

### Bezugsziffernliste

- 1.......................: Profilband
- 1'......................: Profilband
- 1"....................: Profilband
- 2.......................: Umfangsrille
- 3.......................: Rillengruppe
- 3'......................: Rillengruppe
- 3" ....................: Rillengruppe
- 4.......................: Rille
- 4'......................: Rille
- 4"....................: Rille
- 4a.....................: Rillengrund
- 4'a....................: Rillengrund
- 4b.....................: Rillenwand
- 5.......................: Rille
- 5"....................: Rille
- 5a.....................: Rillengrund
- 5b.....................: Rillenwand
- 6.......................: Rille
- 6"....................: Rille
- 6a.....................: Rillengrund
- 6b.....................: Rillenwand
- 7.......................: Zentralbereich
- 8.......................: Flanke
- 9a.....................: Fase
- 9b.....................: Fase
- 10.....................: Fase
- 11.....................: Fase
- 12.....................: Reihe
- 13.....................: Reihe
- 13'....................: Reihe
- 13"..................: Reihe
- 1........................: Erstreckungslänge
- k₁......................: Längskante
- k₂......................: Längskante
- s.......................: Seite
- a.......................: Winkel
- β.......................: Winkel
- β'......................: Winkel

## Patentansprüche

1. Fahrzeugluftreifen mit einem Laufstreifen, welcher durch Umfangsrillen (2) und in Umfangsrichtung umlaufende Profilpositive, zu welchen zumindest ein Profilband (1, 1', 1") gehört, gegliedert ist, wobei im Profilband (1, 1', 1") Rillen (4, 5, 6, 4', 4", 5", 6") mit einer Breite von 0,8 mm bis 1,5 mm ausgebildet sind,
**dadurch gekennzeichnet,**
**dass** jeweils drei Rillen (4, 5, 6, 4', 4", 5", 6") eine Rillengruppe (3, 3', 3") bilden, in welcher die Rillen (4, 5, 6, 4', 4", 5", 6") von einem vertieften Zentralbereich (7) ausgehend im Wesentlichen analog zu den Zacken eines regulären Sterns verlaufen, wobei zumindest zwei Rillen (5, 6, 5", 6") der Rillengruppe (3, 3', 3") innerhalb des Profilbandes (1, 1', 1") enden und eine Rille (4, 4', 4") axialer oder im Wesentlichen in axialer Richtung des Laufstreifens verläuft.

2. Fahrzeugluftreifen nach Anspruch 1, **dadurch gekennzeichnet, dass** im Profilband (1, 1', 1") Rillengruppen (3, 3") angeordnet sind, deren Rillen (4, 5, 6, 4", 5", 6") sämtlich innerhalb des Profilbandes (1, 1") enden.

3. Fahrzeugluftreifen nach Anspruch 1, **dadurch gekennzeichnet, dass** im Profilband (1") Rillengruppen (3') angeordnet sind, deren in axialer oder im Wesentlich in axialer Richtung verlaufende Rille (4') in eine Umfangsrille (2) mündet.

4. Fahrzeugluftreifen nach Anspruch 1 oder 2, **dadurch gekennzeichnet, dass** die Übergangsbereiche der Rillenwände (4b) der in axialer oder im Wesentlichen in axialer Richtung verlaufenden Rille (4, 4', 4") zur Oberfläche des Profilbandes (1) von Fasen (9a, 9b) gebildet sind.

5. Fahrzeugluftreifen nach einem der Ansprüche 1 bis 4, **dadurch gekennzeichnet, dass** die Übergangsbereiche der bezüglich des Zentralbereiches (7) außenseitig verlaufenden Rillenwände (5b, 6b) der beiden weiteren Rillen (5, 6, 5", 6") von Fasen (10, 11) gebildet sind.

6. Fahrzeugluftreifen nach Anspruch 4 oder 5, **dadurch gekennzeichnet, dass** die an der Oberfläche des Profilbandes (1) verlaufenden Längskanten (k1, k2) der Fasen (9a, 9b, 10, 11) an den äußeren Enden der Rillen (4, 5, 6, 4", 5", 6") beginnend in Richtung Zentralbereich (7), in Draufsicht auf das Profilband (1, 1', 1 ") betrachtet, unter einem spitzen Winkel (β, β') zur Mittellängsachse der Rille (4, 5, 6, 4", 5", 6") verlaufen, derart, dass die Rillengruppe (3, 3', 3") eine sternförmige Außenkontur aufweist.

7. Fahrzeugluftreifen nach einem der Ansprüche 1 bis 6, **dadurch gekennzeichnet, dass** im Profilband Rillengruppen (3, 3') mit Rillen (4, 5, 6) angeordnet sind, deren Rillengrund (4a, 5a, 6a) vom Zentralbereich (7) in Richtung geschlossenes Ende der Rillen (4, 5, 6) rampenartig ansteigt.

8. Fahrzeugluftreifen nach einem der Ansprüche 1 bis 7, **dadurch gekennzeichnet, dass** die maximale Tiefe des Zentralbereiches (7) und der Rillen (4', 4, 5, 6) der im Laufstreifen vorgesehenen Profiltiefe entspricht.

9. Fahrzeugluftreifen nach einem der Ansprüche 1 bis 8, **dadurch gekennzeichnet, dass** die Rillen (4, 5, 6, 4', 4", 5", 6") einer Rillengruppe (3, 3', 3 ") zumindest im Wesentlichen übereinstimmende Erstreckungslängen (1) aufweisen.

10. Fahrzeugluftreifen nach einem der Ansprüche 1 bis 9, **dadurch gekennzeichnet, dass** die Rillen (4, 5, 6, 4', 4", 5", 6") einer Rillengruppe (3, 3', 3") über ihre Erstreckung konstant breit und vorzugsweise übereinstimmend breit ausgeführt sind.

11. Fahrzeugluftreifen nach einem der Ansprüche 1 bis 10, **dadurch gekennzeichnet, dass** die Rillengruppen (3, 3', 3") im Profilband (1, 1', 1") in zumindest einer, insbesondere in bis zu vier, vorzugsweise in drei, in Umfangsrichtung verlaufenden Reihe(n) (12, 13, 13', 13") angeordnet sind.

12. Fahrzeugluftreifen nach Anspruch 11, **dadurch gekennzeichnet, dass** in einer Reihe (12, 13, 13', 13") Rillengruppen (3, 3', 3") abwechseln, deren in axialer Richtung verlaufende Rillen (4, 4', 4") unterschiedlich orientiert sind.

13. Fahrzeugluftreifen nach Anspruch 11 oder 12, **dadurch gekennzeichnet, dass** das Profilband (1") im Laufstreifen bei einem Schulterbereich des Reifens, insbesondere der Innenschulter des Reifens, angeordnet ist.

14. Fahrzeugluftreifen nach einem der Ansprüche 11 bis 13, **dadurch gekennzeichnet, dass** die Rillengruppen (3") in der im Profilband (1) am weitesten außenseitig verlaufenden Reihe (13") Rillen (4", 5", 6") aufweisen, deren Tiefe derart gering ist, dass die Ausgestaltung der Rillen (4", 5 ", 6") von den Fasen (9a, 9b, 10, 11) dominiert ist.

15. Fahrzeugluftreifen nach einem der Ansprüche 11 bis 13, **dadurch gekennzeichnet, dass** er ein Sportreifen ist.

## Claims

1. Pneumatic vehicle tyre with a tread which is divided by circumferential grooves (2) and by profile positives running around in the circumferential direction, associated with which is at least one profile strip (1, 1', 1"), wherein grooves (4, 5, 6, 4', 4", 5", 6") with a width of 0.8 mm to 1.5 mm are formed in the profile strip (1, 1', 1'),
**characterized**
**in that** three grooves (4, 5, 6, 4', 4", 5", 6") respectively form a group of grooves (3, 3', 3"), in which the grooves (4, 5, 6, 4', 4", 5", 6") run from a recessed central region (7) in a way substantially analogous to the prongs of a regular star, wherein at least two grooves (5, 6, 5", 6") of the group of grooves (3, 3', 3") end within the profile strip (1, 1', 1") and one groove (4, 4', 4") runs in the axial or substantially axial direction of the tread.

2. Pneumatic vehicle tyre according to Claim 1, **characterized in that** in the profile strip (1, 1', 1") there are arranged groups of grooves (3, 3") of which the grooves (4, 5, 6, 4", 5", 6") all end within the profile strip (1, 1").

3. Pneumatic vehicle tyre according to Claim 1, **characterized in that** in the profile strip (1") there are arranged groups of grooves (3') of which the groove (4') running in the axial or substantially axial direction opens out into a circumferential groove (2).

4. Pneumatic vehicle tyre according to Claim 1 or 2, **characterized in that** the transitional regions of the groove walls (4b) of the groove (4, 4', 4") running in the axial or substantially axial direction in relation to the surface of the profile strip (1) are formed by bevels (9a, 9b).

5. Pneumatic vehicle tyre according to one of Claims 1 to 4, **characterized in that** the transitional regions of the groove walls (5b, 6b) of the two further grooves (5, 6, 5", 6") that are running on the outside with respect to the central region (7) are formed by bevels (10, 11).

6. Pneumatic vehicle tyre according to Claim 4 or 5, **characterized in that**, when considered in a plan view of the profile strip (1, 1', 1"), the longitudinal edges (k1, k2) of the bevels (9a, 9b, 10, 11) that are running on the surface of the profile strip (1) begin at the outer ends of the grooves (4, 5, 6, 4", 5", 6") by running in the direction of the central region (7) at an acute angle (β, β') to the centre longitudinal axis of the groove (4, 5, 6, 4", 5", 6") in such a way that the group of grooves (3, 3', 3") has a star-shaped outer contour.

7. Pneumatic vehicle tyre according to one of Claims 1 to 6, **characterized in that** in the profile strip there are arranged groups of grooves (3, 3') with grooves (4, 5, 6) of which the groove base (4a, 5a, 6a) rises in the manner of a ramp from the central region (7) in the direction of the closed end of the grooves (4, 5, 6).

8. Pneumatic vehicle tyre according to one of Claims 1 to 7, **characterized in that** the maximum depth of the central region (7) and of the grooves (4', 4, 5, 6) corresponds to the profile depth provided in the tread.

9. Pneumatic vehicle tyre according to one of Claims 1 to 8, **characterized in that** the grooves (4, 5, 6, 4', 4", 5", 6") of a group of grooves (3, 3', 3") have at least substantially coinciding lengths of extent (1).

10. Pneumatic vehicle tyre according to one of Claims 1 to 9, **characterized in that** the grooves (4, 5, 6, 4', 4", 5", 6") of a group of grooves (3, 3', 3") are made to be constantly wide over their extent and preferably of a coinciding width.

11. Pneumatic vehicle tyre according to one of Claims 1 to 10, **characterized in that** the groups of grooves (3, 3', 3") in the profile strip (1, 1', 1") are arranged in at least one, in particular in up to four, preferably in three, row(s) (12, 13, 13', 13") running in the circumferential direction.

12. Pneumatic vehicle tyre according to Claim 11, **characterized in that** in a row (12, 13, 13', 13") there alternate groups of grooves (3, 3', 3") of which the grooves (4, 4', 4") that run in the axial direction are differently oriented.

13. Pneumatic vehicle tyre according to Claim 11 or 12, **characterized in that** the profile strip (1") is arranged in the tread at a shoulder region of the tyre, in particular the inner shoulder of the tyre.

14. Pneumatic vehicle tyre according to one of Claims 11 to 13, **characterized in that** the groups of grooves (3") in the row (13") running furthest to the outside in the profile strip (1) has grooves (4", 5", 6") of which the depth is so small that the configuration of the grooves (4", 5", 6") is dominated by the bevels (9a, 9b, 10, 11).

15. Pneumatic vehicle tyre according to one of Claims 11 to 13, **characterized in that** it is a sports tyre.

## Revendications

1. Bandage pneumatique pour roue de véhicule présentant une bande de roulement divisée par des rainures (2) et des profilés positifs s'étendant dans la direction périphérique et de laquelle au moins une bande profilée (1, 1', 1") fait partie, des rainures (4, 5, 6, 4', 4", 5", 6") d'une largeur de 0,8 mm à 1,5 mm étant formées dans la bande profilée (1, 1', 1"),
**caractérisé en ce que**
chaque fois trois rainures (4, 5, 6, 4', 4'', 5", 6") forment un groupe (3, 3', 3") de rainures dans lequel depuis une partie centrale (7) en creux, les rainures (4, 5, 6, 4', 4", 5", 6") s'étendent essentiellement à la manière des branches d'une étoile régulière, **en ce qu'**au moins deux rainures (5, 6, 5", 6") du groupe (3, 3', 3") de rainures se terminent à l'intérieur de la bande profilée (1, 1', 1") et **en ce qu'**une rainure (4, 4', 4") s'étend dans la direction axiale ou essentiellement dans la direction axiale de la bande de roulement.

2. Bandage pneumatique pour roue de véhicule selon la revendication 1, **caractérisé en ce que** des groupes de rainures (3, 3") dont les rainures (4, 5, 6, 4", 5", 6") se terminent toutes à l'intérieur de la bande profilée (1, 1") sont disposées dans la bande profilée (1, 1', 1").

3. Bandage pneumatique pour roue de véhicule selon la revendication 1, **caractérisé en ce que** des groupes de rainures (3') dont la rainure (4') qui s'étend dans la direction axiale ou essentiellement dans la direction axiale débouche dans une rainure périphérique (2) sont disposés dans la bande profilée (1").

4. Bandage pneumatique pour roue de véhicule selon les revendications 1 ou 2, **caractérisé en ce que** les parties de transition des parois (4b) des rainures (4, 4', 4") s'étendant dans la direction axiale ou essentiellement dans la direction axiale vers la surface de la bande profilée (1) sont formées de chanfreins (9a, 9b).

5. Bandage pneumatique pour roue de véhicule selon l'une des revendications 1 à 4, **caractérisé en ce que** les parties de transition des parois (5b, 6b) de rainures s'étendant du côté extérieur par rapport à la partie centrale (7) des deux autres rainures (5, 6, 5", 6") sont formées de chanfreins (10, 11).

6. Bandage pneumatique pour roue de véhicule selon les revendications 4 ou 5, **caractérisé en ce que** vus en plan sur la bande profilée (1, 1', 1"), les bords longitudinaux (k1, k2) des chanfreins (9a, 9b, 10, 11) s'étendant sur la surface de la bande profilée (1), commencent aux extrémités extérieures des rainures (4, 5, 6, 4", 5", 6") pour s'étendre en direction de la partie centrale (7) sous un angle aigu (β, β') par rapport à l'axe longitudinal central des rainures (4, 5, 6, 4", 5", 6"), de telle sorte que les groupes (3, 3', 3") de rainures présentent un contour extérieur en forme d'étoile.

7. Bandage pneumatique pour roue de véhicule selon l'une des revendications 1 à 6, **caractérisé en ce que** des groupes (3, 3') de rainures (4, 5, 6) dont les flancs (4a, 5a, 6a) de rainure remontent en pente depuis la partie centrale (7) vers l'extrémité fermée des rainures (4, 5, 6) sont disposés dans la bande profilée.

8. Bandage pneumatique pour roue de véhicule selon l'une des revendications 1 à 7, **caractérisé en ce que** la profondeur maximale de la partie centrale (7) et des rainures (4', 4, 5, 6) correspond à la profondeur du profilé prévu dans la bande de roulement.

9. Bandage pneumatique pour roue de véhicule selon l'une des revendications 1 à 8, **caractérisé en ce que** les rainures (4, 5, 6, 4', 4", 5", 6") d'un groupe (3, 3', 3") de rainures s'étendent sur des longueurs (1) qui se correspondent essentiellement.

10. Bandage pneumatique pour roue de véhicule selon l'une des revendications 1 à 9, **caractérisé en ce que** les rainures (4, 5, 6, 4', 4", 5", 6") d'un groupe (3, 3', 3") de rainures ont une largeur constante sur toute leur extension et ont de préférence des largeurs en correspondance.

11. Bandage pneumatique pour roue de véhicule selon l'une des revendications 1 à 10, **caractérisé en ce que** les groupes (3, 3', 3") de rainures sont disposés dans la bande profilée (1, 1', 1") en au moins une rangée, et en particulier en jusque quatre et de préférence en trois rangées (12, 13, 13', 13") qui s'étendent dans la direction périphérique.

12. Bandage pneumatique pour roue de véhicule selon la revendication 11, **caractérisé en ce que** des groupes (3, 3', 3") de rainures dont les rainures (4, 4', 4") s'étendent sous différentes orientations dans la direction axiale alternent dans une rangée (12, 13, 13', 13").

13. Bandage pneumatique pour roue de véhicule selon les revendications 11 ou 12, **caractérisé en ce que** la bande profilée (1") est disposée dans la bande de roulement sur une partie d'épaulement du bandage de roue et en particulier sur l'épaulement intérieur du bandage de roue.

14. Bandage pneumatique pour roue de véhicule selon l'une des revendications 11 à 13, **caractérisé en ce que** dans la rangée (13") qui s'étend le plus à l'extérieur dans le profilé (1), les groupes (3") de rainures présentent des rainures (4"), 5", 6") dont la profondeur est suffisamment petite pour que la configuration des rainures (4", 5", 6") soit dominée par les chanfreins (9a, 9b, 10, 11).

15. Bandage pneumatique pour roue de véhicule selon l'une des revendications 11 à 13, **caractérisé en ce que** c'est un bandage de roue de véhicule de sport.
